Europäisches Patentamt

European Patent Office

Office européen des brevets

(11) Publication number: **0 455 968 A2**

## EUROPEAN PATENT APPLICATION

(21) Application number: **91104452.7**

(22) Date of filing: **21.03.91**

(51) Int. Cl.5: **G01N 27/453**

(30) Priority: **10.05.90 US 521516**

(43) Date of publication of application:
**13.11.91 Bulletin 91/46**

(84) Designated Contracting States:
**DE SE**

(71) Applicant: **Hewlett-Packard Company**
**Mail Stop 20 B-O, 3000 Hanover Street**
**Palo Alto, California 94304(US)**

(72) Inventor: **Rose, Donald J., Jr.**
**340 Vincent Drive**
**Mountain View, CA 94041(US)**

(74) Representative: **Schoppe, Fritz, Dipl.-Ing.**
**Seitnerstrasse 42**
**W-8023 Pullach bei München(DE)**

(54) Detection system for capillary electrophoresis.

(57) A Free-Solution Post-Capillary Reactor [100b] that provides enhanced detection sensitivity is disclosed. The present invention improves the convenience and usefulness of the mixing system described in the inventor's parent patent by eliminating the outer capillary of the coaxial reactor and its associated plumbing. The present invention comprises a separation capillary [102] that is inserted into a reactor vessel [106] filled with detection fluid [109]. The vessel [106] utilized in the preferred embodiment serves as the buffer reservoir that receives the output from the end of the separation capillary [102]. The present reactor does not rely on an electric field to assist in the mixing of separated zones with the reagent, but rather employs the diffusion of molecules in free solution to mix zones of solute [108] with reagent [110]. When an electric field is applied across electrodes [101a, 101b] at the ends of the separation capillary [102], unknown solutes [108] borne in a buffer [109] separate from one another and are conducted from the input end of the capillary to the delivery end [112] of the capillary, which is located inside the reactor vessel [106]. The distinct bands of solute [108] diffuse into the fluid [109] that occupies a detection zone [111] which is adjacent to the delivery end [112] of the capillary. Once the solutes [108] are conveyed to the detection zone [111], their identity is determined using a variety of known analytical techniques. The preferred embodiment employs a sensor [118] which includes a photomultiplier tube (PMT) [118d].

FIG. 4

## CROSS-REFERENCE TO A RELATED PATENT APPLICATION

The present application is a Continuation-In-Part of the Applicant's pending U.S. Application Serial No. 07/266,547 which was filed on November 3, 1988 and which is entitled "Capillary Separation System with Electric Field Assisted Post-Separation Mixing." The prior application is hereby incorporated by reference.

## FIELD OF THE INVENTION

The present invention is an apparatus and method for identifying unknown substances. This invention is particularly concerned with the recognition of large chemical and biological substances which are electrophoretically separated in a narrow bore capillary. These biological macromolecules are detected by mixing the separated zones of solute with appropriate reagents following the separation process.

## BACKGROUND OF THE INVENTION

Recent advances in biotechnology have accelerated the demand of research laboratories, healthcare facilities, and pharmaceutical manufacturers for devices which are capable of accurately and rapidly identifying extremely small quantities of inorganic and organic substances. Previous techniques, which include gas and liquid chromatography, have been employed to assay samples whose molecular structure is relatively small. Although chromatography may be successfully employed to resolve metals, inorganic mixtures, and small organic ions; the very large and exceedingly complex molecules of amino acids, proteins, peptides, and DNA are more difficult to isolate and discover in a sample of unknown composition. Another serious flaw that limits the usefulness of chromatographic methods is the predicament that is encountered when the unknown sample is especially sparse, since chromatography utilizes relatively large amounts of the material which requires analysis.

Capillary electrophoresis (CE) is another well-known procedure that enables the researcher or scientist to evaluate undetermined materials. An electric field is imposed across a length of narrow tubing or capillary that contains a mixture of the unknown sample and a non-reactive liquid often called a buffer solution. The electric field causes the constituents of the unknown sample to migrate through the capillary due to the electrical attraction created by the field. Another phenomena, called electro-osmotic flow, is primarily responsible for the movement of all sample constituents, regardless of charge, through the separation capillary. The physics of electro-osmotic flow are described in detail in the parent patent application, which has been incorporated by reference. The effects of the electric field and the electro-osmotic flow cause different components within the sample to be attracted toward electrodes placed at each end of the separation system. This attraction causes movement of the sample, but at different rates due to their varying molecular drag and varying net electrical charges. Because dissimilar substances do not react to the drag and electrical attraction in the same way, they are separated into distinct zones or groups as they progress along the capillary. Each band or zone of constituent material that makes up the original unseparated mixture of unknown material passes through the capillary by itself. At some point along this tubing, each band is examined and identified by a detector. One type of detector for electrophoretic separations probes the unknown material by shining light through the material and then gauging how much light is absorbed by the material.

Conventional electrophoretic techniques, however, are plagued by insufficiently sensitive detectors. Fluorescence detection is one of the most sensitive forms of detection, but its usefulness in capillary electrophoresis is limited, because few biological macromolecules fluoresce. This limitation, which is addressed by the parent patent application referred to above, can be overcome if the separated sample zones are mixed with a reagent which is flourogenic, i.e., a reagent which fluoresces only when mixed with the separated sample zones. The mixing technique employed by the inventor's previous system constituted an important and novel improvement, but is still somewhat limited.

As the technology of genetic engineering continues to evolve, diagnostic and measurement techniques which are more accurate, reliable, and sensitive become increasingly more valuable. Doctors, clinicians, and laboratory technicians need more powerful tools to explore the intricacies of the genetic code, to improve the hardiness and usefulness of plant and animal life in an effort to feed the world's burgeoning population, and ultimately to devise cures for inherited disabilities and dreaded diseases. The difficulty of providing a highly sensitive and precise biological detection and analysis system that overcomes the problem of low detection sensitivity has presented a major challenge to designers and innovators in the biochemical arts. The development of a sensitive system for sensing the components of an unspecified biological sample would constitute a major technological advance in the biochemical and biotechnology industries. The enhanced performance that could be achieved using such an innovative device would satisfy a long felt need within the business and would enable manufacturers of drugs, medicines, and biological products to save substantial expenditures of time and money.

## SUMMARY OF THE INVENTION

The Free-Solution Post-Capillary Reactor is a novel apparatus that provides enhanced detection sensitivity and improves the convenience and usefulness of the mixing system described in the inventor's parent patent by eliminating the outer capillary of the coaxial reactor and its associated plumbing. The present invention comprises a separation capillary that is inserted into a reactor vessel filled with detection fluid. The vessel utilized in the preferred embodiment serves as the buffer reservoir that receives the output from the end of the separation capillary. The present reactor does not rely on an electric field to assist in the mixing of separated zones with the reagent, but rather employs the diffusion of molecules in free solution to mix zones of solute with reagent. When an electric field is applied across the separation capillary, unknown solutes borne in a buffer separate from one another and are conducted from the input end of the capillary to the delivery end of the capillary, which is located inside the reactor vessel. The distinct bands of solute diffuse into the fluid that occupies a detection zone which is adjacent to the delivery end of the capillary. Once the solutes are conveyed to the detection zone, their identity is determined using a variety of known analytical techniques. The zones of solute can be mixed with a flourogenic reagent, and the resulting fluorescence is measured. In an alternative embodiment, the zones can be mixed with a scintillation fluid and the radiation which is emitted is then measured.

An appreciation of other aims and objectives of the present invention and a more complete and comprehensive understanding of this invention may be achieved by studying the following description of a preferred embodiment and by referring to the accompanying drawings.

## BRIEF DESCRIPTION OF THE DRAWINGS

Figure 1 is a schematic representation of a conventional capillary electrophoretic separation system.

Figure 2 is a schematic cut-away view of one embodiment of the Free-Solution Post-Capillary Reactor.

Figure 3 is an enlarged schematic depiction of the interior of one embodiment of the reactor vessel.

Figure 4 reveals a schematic cross-sectional view of a preferred embodiment of the present invention.

Figure 5 is a schematic diagram of a second alternative embodiment of the invention.

## DETAILED DESCRIPTION OF A PREFERRED EMBODIMENT

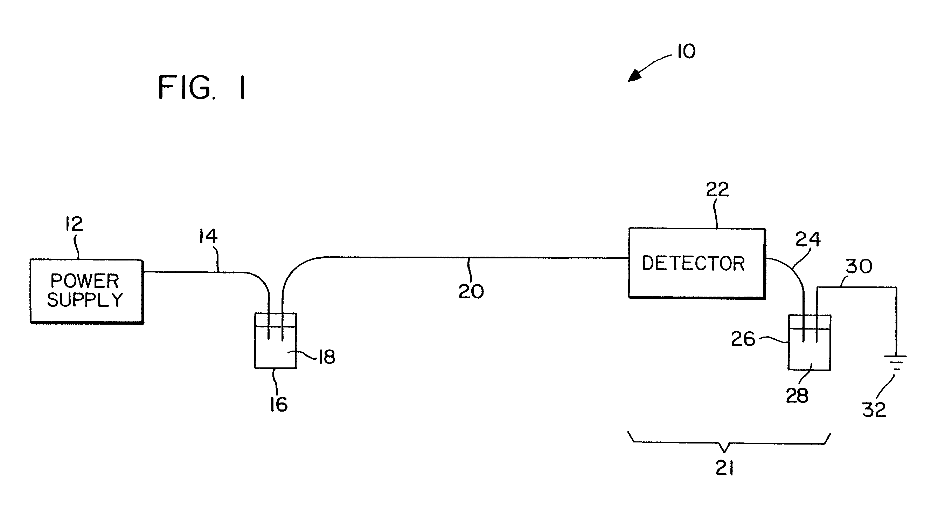

Figure 1 is a schematic depiction of a previous, post-column capillary electrophoretic separation system 10. A power supply 12 is connected to a first positive electrode 14 that has been placed into a reservoir 16 containing a mixture 18 of an unknown solute in a buffer. A separation capillary 20 extends from reservoir 16 to a detector section 21, which may include a detector 22, an illumination source, and a photoconductive sensor (not shown in Figure 1). A final section of capillary 24 connects detector 22 to a reservoir 26 which collects the separated mixture 28 after it has passed through the post-capillary detector 22. A ground electrode 30 terminates inside reservoir 26 and is coupled to a ground terminal 32.

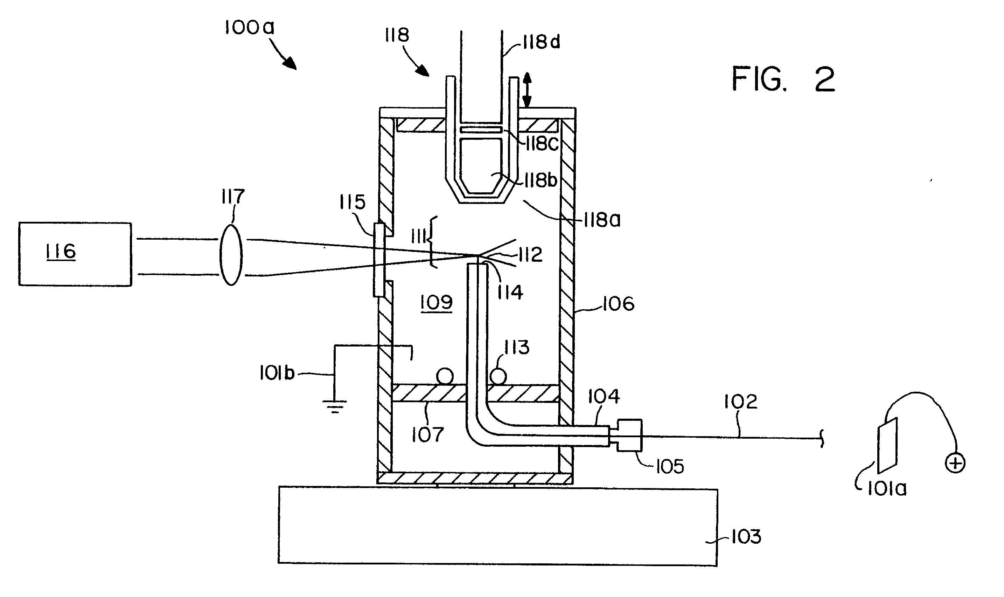

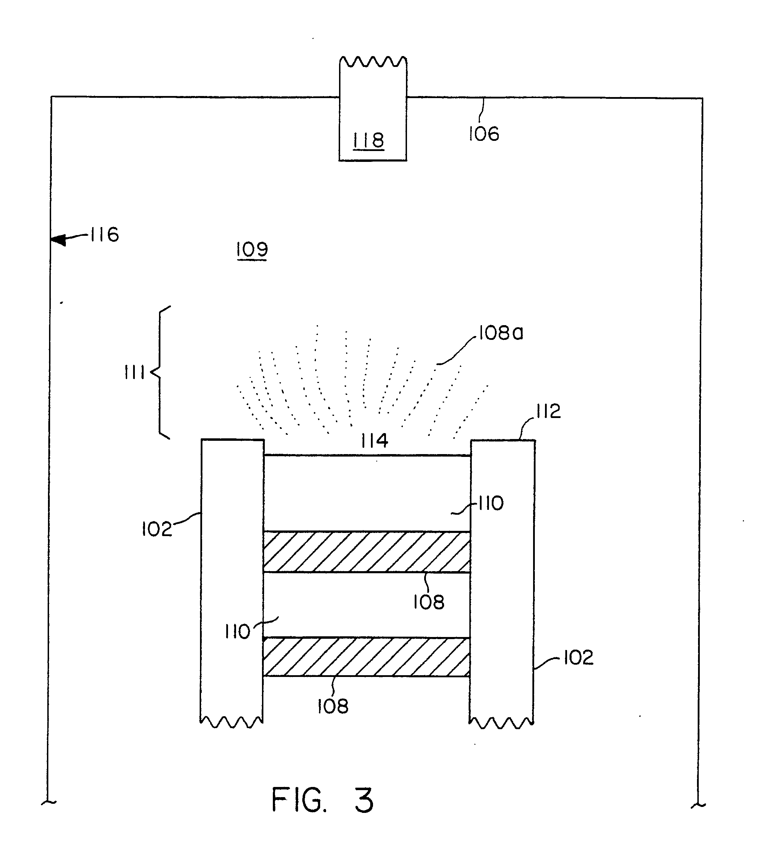

Figure 2 is a schematic illustration of one embodiment of the Free-Solution Post-Separation Reactor 100a. This reactor 100a may be employed with the conventional separation system 10, and would replace the detector stage 21 portrayed in Figure 1. A positive electrode 101a and a ground electrode 101b regulate the flow of materials through the reactor 100a. A narrow separation capillary 102 which conveys a mixture of unknown solute in a buffer is enclosed by a support capillary 104. The separation capillary 102 utilized in this embodiment has an inside diameter which is generally less than one thousand microns. The end of the support capillary 104 which receives the separation capillary 102 terminates in an open compression fitting 105. This fitting 105 is made from stainless steel and also serves as the ground terminal for the electrical circuit in this embodiment of the invention. The separation capillary 102 enters the side of a reactor vessel 106 which is supported by a stir plate 103. Capillary 102 curves upward through a compartment wall 107. Bands of solute 108 separated by volumes of buffer 110 are transported to the delivery end 112 of capillary 102 and exit the separation capillary 102 through an aperture 114. The solute 108 and buffer 110, which are shown in detail in Figure 3, emerge into a detection fluid 109 which fills the vessel 106. This fluid 109 is circulated by an annular stir bar 113 which surrounds separation capillary 102 just above compartment wall 107. A region called a detection zone 111 extends just above the delivery end 112 of the separation capillary 102. In optimal circumstances, the solute 108 reacts with the detection fluid 109 within five hundred microns of the aperture 114. The volume defined by this radius generally delineates the boundaries of an optimized detection zone 111. An illumination source 116 is directed toward detection zone 111 through a silica window 115 which resides in the side wall of the vessel 106. Radiation is generated either by the reaction of the solute 108 with the detection fluid 109 or by the stimulation from an illumination source 116 such as a laser. This reaction radiation is collected by a sensor 118, which comprises a movable detection piece 118a, a microscope objective 118b, an emission filter 118c, and a photomultiplier tube (PMT) 118d.

Figure 3 is an enlarged schematic view of the interior of the embodiment presented in Figure 2. Zones or bands of solute 108 are shown separated by regions of buffer solution 110 within the separation capillary 102. At the delivery end 112 of the capillary 102, portions of solute 108a emerge from aperture 114 into the detection zone 111. This region 111 is a generalized volume within vessel 106 that located adjacent to the delivery end 112 of the separation capillary 102 and which is occupied by detection fluid 109. Both the illumination source 116 and the sensor 118 are focused on the detection region 111.

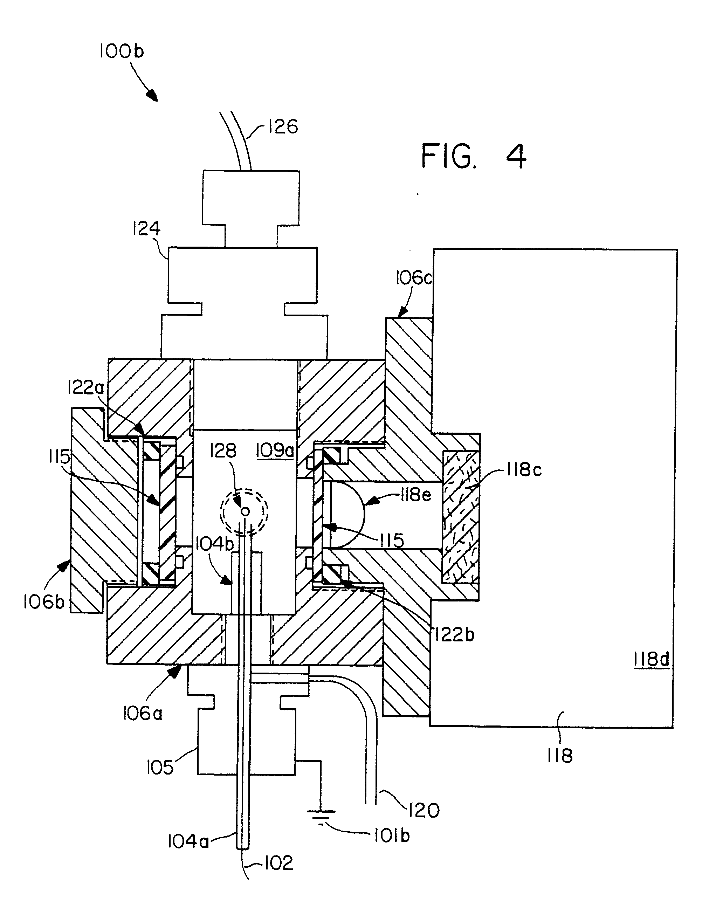

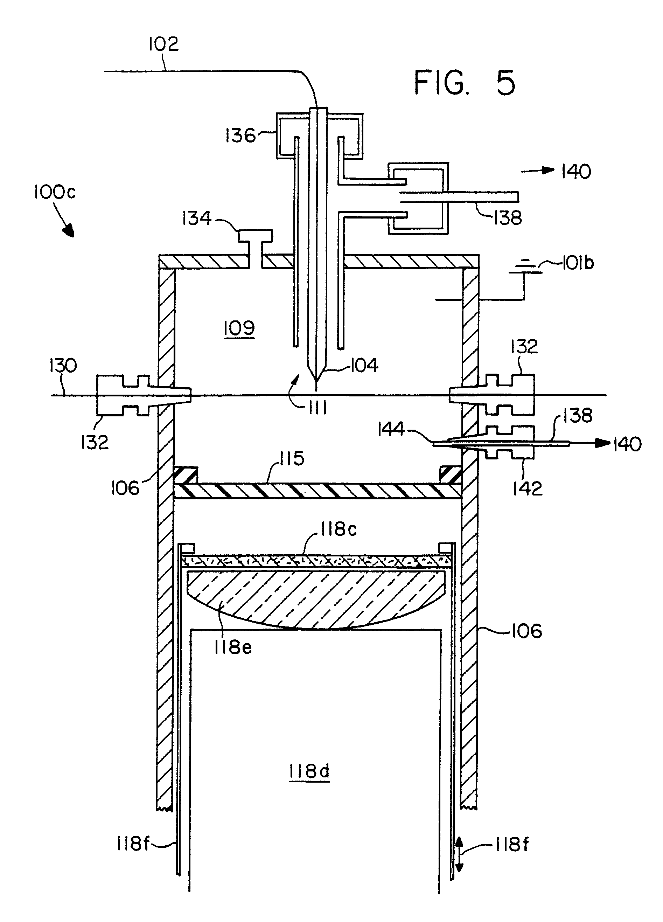

Figure 4 is a cut-away schematic drawing which reveals the preferred embodiment of the present invention 100b. A glass support capillary 104a coupled to a stainless steel tube 104b maintains the position of the separation capillary 102 in this version of the invention. A cell body 106a, a side plug 106b, and a PMT adapter 106c generally enclose a detection fluid chamber 109a. Delrin rings 122a provide tight seals between the cell body 106a, the plug 106b, and the adapter 106c. An f/1.3 borosilicate glass lens 118e resides within the adapter 106c and collects radiation from the fluid-filled chamber 109a. Detection fluid 109 is introduced into the chamber 109a through an inlet 120. An outlet 126 for the fluid 109 is surrounded by a fitting 124. An optical fiber 130 (not shown in Figure 4, see Figure 5) is employed to illuminate the detection zone 111. The fiber 130 is threaded through a hole 128 formed in the cell body 106a.

Figure 5 is a cut-away schematic view of another alternative embodiment of the invention 100c. This configuration includes a movable sleeve 118f within which the detector 118 is mounted. Two optical fibers 130, which are each protected by a stainless steel sheath, pass into the vessel 106 toward the detection zone 111 through fittings 132. A fill port 134 is provided for supplying detection fluid 109 to the reactor. The separation capillary 102 is conducted into the vessel 106 through a tee 136 that also includes a line 138 from a peristaltic pump 140 (not shown in Figure 5). Another fitting 142 holds a line 138 that extends to the peristaltic pump and terminates in an outlet 144 inside the vessel 106.

*Operation of the Invention*

The present invention may be utilized with great success in a wide variety of conventional electrophoretic separation systems, like the one illustrated in Figure 1. An unknown solute 108 is first introduced into an input reservoir that contains a buffer fluid 110, a positive electrode 101a, and the input end of the separation capillary 102. An electric field is then imposed across both ends of the separation column. Under the influence of the phenomena described earlier in the background section, the various solutes 108 mixed into the buffer 110 separate into discrete bands as they approach the detection zone 111. When the various zones 108 emerge from aperture 114 in the delivery end 112 of the separation capillary, they diffuse into a detection fluid 109. Using a fluorogenic solution, such as O-Phthaldialdehyde (OPA), as the detection fluid, zones react with the solution to produce a fluorescent product. The product is detected by exciting the product with ultraviolet light (using optical fiber 130) and monitoring the resultant fluorescence via sensor 118. If the zones of solute material 108 are radioactive, they can be detected using a scintillation fluid as the detection fluid. Radioactive decay of the sample results in visible light being emitting from the fluid which can be monitored with sensor 118 (no excitation illumination is necessary). The nature of the unknown solute 108 is then determined by interpreting an electrical signal generated by the sensor 118. If the zones of solute 108 are not radioactive, they can be stimulated to emit radiation. The detection fluid 109 may be selected to react with a particular type of solute 108 and to radiate when the solute 108 mixes with the detection fluid 109. The detection fluid 109 may be selected so that it is capable of inducing a fluorescent reaction in detection zone 111 which would be perceived by sensor 118. A third option involves exciting solute 108 in the detection zone 111 with an illumination source 116. This source 116 can be a laser or some other light means, and may be directed to detection zone 111 by an optical fiber 130.

Although the present invention has been described in detail with reference to a particular preferred embodiment, persons possessing ordinary skill in the art to which this invention pertains will appreciate that various modifications and enhancements may be made without departing from the spirit and scope of the claims that follow.

*LIST OF REFERENCE NUMERALS*

EP 0 455 968 A2

## Figure 1

| 10 | Electrophoretic separation system |
| 12 | Power supply |
| 14 | First positive electrode |
| 16 | Solute and buffer input reservoir |
| 18 | Solute and buffer mixture |
| 20 | Separation capillary |
| 21 | Detector section |
| 22 | Detector |
| 24 | Post-detector section of capillary |
| 26 | Post-detector reservoir |
| 28 | Solute and buffer mixture |
| 30 | Ground electrode |
| 32 | Ground terminal |

## Figures 2 & 3

| 100a | Free-Solution Post-Capillary Reactor |
| 101 | Electrodes |
| 102 | Separation capillary |
| 103 | Stir plate |
| 104 | Support capillary |
| 104a | Glass support capillary |
| 104b | Stainless steel support tube |
| 105 | Compression fitting |
| 106 | Reactor vessel |
| 106a | Cell body |
| 106b | Side plug |
| 106c | PMT adapter |
| 107 | Compartment wall |
| 108 | Bands of solute |
| 108a | Portions of solute emerging from aperture |
| 109 | Detection fluid |
| 110 | Buffer solution |
| 111 | Detection zone |
| 112 | Delivery end of separation capillary |
| 113 | Annular stir bar |
| 114 | Delivery aperture of separation capillary |
| 115 | Silica window |
| 116 | Light source |
| 117 | Lens |
| 118 | Sensor |
| 118a | Movable detection piece |
| 118b | Microscope objective |
| 118c | Emission filter |
| 118d | Photomultiplier tube |
| 118e | Borosilicate glass lens |
| 120 | Detection fluid inlet |
| 122a,b | Delrin ring |
| 124 | Fitting |
| 126 | Detection fluid outlet |
| 128 | Hole for optical fiber |

## Figure 4

| 118f | Movable sleeve |
| 130 | Optical fiber in stainless steel sheath |
| 132 | Fittings for optical fiber |
| 134 | Fill port for detection fluid |
| 136 | Tee |
| 138 | Line from peristaltic pump |
| 140 | Peristaltic pump |
| 142 | Fitting for line to peristaltic pump |
| 144 | Outlet to peristaltic pump |

## Claims

1. An apparatus [100] comprising:

   an outer chamber means [106] for enclosing a reaction; said outer chamber means being substantially filled with a detection fluid [109]; said outer chamber means [106] including a detection zone [111];

   a flow generation means [101] for transporting an unknown solute [108] and a buffer [110] said to said detection zone [111];

   a conduit means [102] for conveying said solute [108] and said buffer [110] to said detection zone [111]; said conduit means [102] having a delivery end [112]; said delivery end [112] having an aperture [114]; said delivery end [112] and said aperture [114] being at least partially surrounded by said outer chamber means [106]; and

   a detection means [118] for sensing radiation caused by the reaction of said solute [108] and said detection fluid [109].

2. An apparatus as recited in Claim 1, further comprising an excitation means [116] for stimulating an emission of radiation from said solute [108] in said detection zone [111].

3. An apparatus as recited in Claim 1, in which said excitation means [116] is a source of light.

4. An apparatus as recited in Claim 1, in which said excitation means [116] is a laser.

5. An apparatus as recited in Claim 1, in which radiation from said excitation means [116] is conveyed toward said detection zone [111] by an optical fiber [130].

6. A method of analyzing a plurality of unknown radioactive solutes [108] borne by a buffer [110] comprising the steps of:

   providing an outer chamber means [106] for containing a detection fluid [109];

separating said radioactive solutes [108] within said buffer [110] in a conduit means [102] for conveying said radioactive solutes [108]; said conduit means [102] being at least partially surrounded by said outer chamber means [106]; and

delivering said radioactive solutes [108] after separation to a detection zone [111]; and

measuring an emission of radiation emitted by said radioactive solutes [108] in said detection zone [111] to identify said radioactive solutes [108].

7. A method of analyzing a plurality of unknown solutes [108] borne by a buffer [110] comprising the steps of:

providing an outer chamber means [106] for containing a detection fluid [109];

separating said solutes [108] within said buffer [110] through a conduit means [102] for separating said solutes [108]; said conduit means [102] being at least partially surrounded by said outer chamber means [106];

delivering said solutes [108] after separation to a detection zone [111];

stimulating an emission of radiation from said solutes [108] while said solutes [108] occupy said detection zone [111]; and

measuring said emission of radiation emitted by said solutes [108] to identify said solutes [108].

8. A method of analyzing a plurality of unknown solutes [108] borne by a buffer [110] comprising the steps of:

providing an outer chamber means [106] for containing a reactive detection fluid [109];

separating said solutes [108] within said buffer [110] through a conduit means [102] for separating said solutes [108]; said conduit means [102] being at least partially surrounded by said outer chamber means [106];

delivering said solutes [108] after separation to a detection zone [111]; and

measuring said emission of radiation emitted by said solutes [108] after said solutes [108] combine chemically with said reactive detection fluid [109] to identify said solutes [108].

9. A method of analyzing a plurality of unknown solutes borne by a buffer comprising the steps of:

providing an outer chamber means [106] for containing a detection fluid [109];

separating said solutes [108] within said buffer [110] through a conduit means [102] for separating said solutes [108]; said conduit means [102] being at least partially surrounded by said outer chamber means [106];

injecting a stimulating reagent into said conduit means [102];

delivering said solutes [108] after separation to a detection zone [111];

measuring said emission of radiation emitted by said solutes [108] after said solutes [108] combine chemically with said stimulating reagent to identify said solutes [108].

FIG. 1

POWER
SUPPLY

DETECTOR

12

14

16

18

20

22

24

26

28

30

32

21

10

EP 0 455 968 A2

7

FIG. 2

EP 0 455 968 A2

FIG. 3

100b

126

124

FIG. 4

106c

122a

115

128    109a

106b

106a

104b

118e

118c

115

122b

118d

105

104a

120

101b

102

118

FIG. 5